# EUROPÄISCHE PATENTSCHRIFT

(11) **EP 2 464 780 B1**
(45) Veröffentlichungstag und Bekanntmachung des Hinweises auf die Patenterteilung: **17.02.2016**
(21) Anmeldenummer: 10739926.3
(22) Anmeldetag: 03.08.2010
(51) Int. Cl.: D06F 39/02

(54) **WASSERFÜHRENDES HAUSGERÄT MIT EINEM SCHALTVENTIL**
WATER-CHANNELLING DOMESTIC APPLIANCE WITH A CONTROL VALVE
APPAREIL MÉNAGER À CIRCULATION D'EAU COMPORTANT UNE SOUPAPE DE COMMANDE

(30) Priorität: 12.08.2009 DE 102009028481
(43) Veröffentlichungstag der Anmeldung: 20.06.2012
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2010/061244
(87) Internationale Veröffentlichungsnummer: WO 2011/018385

(56) Entgegenhaltungen:
- EP-A1- 0 008 702
- EP-A2- 0 204 258
- DE-A1- 19 504 900
- DE-C1- 19 922 414

## Beschreibung

Die Erfindung betrifft ein wasserführendes Hausgerät, insbesondere Wäschebehandlungsgerät zum Waschen und/oder Trocknen von Wäsche, mit einem Schaltventil, das einen Ventilraum aufweist, in den ein Eingang mündet, wobei der Ventilraum einen ersten Ausgang mit einer ersten Ventilsitzfläche und einen zweiten Ausgang mit einer zweiten Ventilsitzfläche aufweist, und wobei das Schaltventil eine magnetische Betätigungseinrichtung zum wahlweisen Steuern eines Flüssigkeitsstroms von dem Eingang zu dem ersten Ausgang oder dem zweiten Ausgang aufweist. Speziell betrifft die Erfindung das Gebiet der Waschmaschinen und Waschtrockner.

Ein solches Hausgerät geht hervor aus der EP 0 204 258 A1.

Aus der EP 1 209 275 A2 ist eine Waschmaschine bekannt, bei der ein Laugenbehälter über eine Leitung, ein Magnetventil und eine Waschmitteleinspüleinrichtung mit Wasser befüllt werden kann. Ferner ist an dem Boden des Laugenbehälters eine Ablaufleitung angeschlossen, die über eine Laugenpumpe zu einem Ablaufschlauch führt.

Bei einer Waschmaschine ist es üblich, dass die Waschmitteleinspüleinrichtung eine Einspülschale mit drei Kammern aufweist. Die verschiedenen Kammern werden vorzugsweise getrennt voneinander ausgespült. Hierbei ist es möglich, dass zwei Ventile vorgesehen sind, wobei durch eine Überkreuzung der Fließwege der beiden Ventile das zufließende Wasser in jeweils eine der drei Kammern der Einspülschale geleitet werden kann, je nachdem ob jeweils eins der Ventile oder aber beide gleichzeitig geöffnet sind. Eine derartige Anordnung ist beispielsweise in EP 0 719 884 A1 dargestellt. Solch eine Ausgestaltung hat allerdings den Nachteil, dass mehrere Ventile erforderlich sind (auch wenn die Gesamtzahl von drei auf zwei reduziert werden konnte), wodurch der gesamte Aufbau zur Einspülung eine relativ große Anzahl an Komponenten erfordert.

DE 60 2004 002 279 T2 befasst sich mit Waschmaschinen, die mit einem Kalt- und einem Warmwasseranschluss arbeiten und schlägt vor, außer zwei Elektromagnetventilen für den jeweiligen Wasseranschluss, einen Balg zu verwenden, der mit Düsenmitteln ausgestattet ist. Nachteilig ist an dieser Anordnung wiederum, dass mehrere Elektromagnetventile notwendig sind.

DE 199 60 311 beschreibt eine Vorrichtung zur Zugabe von Reinigungsmittel mithilfe eines beweglichen Ventilkörpers, der durch einen Magneten in zwei verschiedene Stellungen gebracht werden kann, wobei die eine die Zugabeöffnung öffnet und die andere die Zugabeöffnung schließt. Eine Aufteilung auf mehrere Wege ist mit dieser Vorrichtung jedoch nicht möglich.

DE 199 18 337 A1 offenbart ein Zweiwegeventil, welches durch das Bewegen eines Stellelements und durch einen Flüssigkeitsstrom eine Kugel in zwei verschiedene Verschlussstellungen dirigieren kann. Durch diese Anordnung sind jedoch nur zwei Richtungen möglich.

Aufgabe der Erfindung ist es, ein wasserführendes Hausgerät zu schaffen, das einen verbesserten Aufbau aufweist. Speziell ist es eine Aufgabe der Erfindung, ein wasserführendes Hausgerät zu schaffen, bei dem die Herstellungskosten und insbesondere die Anzahl der Teile sowie der Aufwand bei der Montage reduziert sind.

Die Aufgabe wird gelöst durch ein wasserführendes Hausgerät, insbesondere Wäschebehandlungsgerät zum Waschen und/oder Trocknen von Wäsche, mit einem Schaltventil, das einen Ventilraum aufweist, in den ein Eingang mündet, wobei der Ventilraum einen ersten Ausgang mit einer ersten Ventilsitzfläche und einen zweiten Ausgang mit einer zweiten Ventilsitzfläche aufweist, und wobei das Schaltventil eine magnetische Betätigungseinrichtung zum wahlweisen Steuern eines Flüssigkeitsstroms von dem Eingang zu dem ersten Ausgang oder dem zweiten Ausgang aufweist, und wobei das Schaltventil einen von der magnetischen Betätigungseinrichtung betätigbaren kugelförmigen Ventilschließkörpe aufweist, der einerseits mit der ersten Ventilsitzfläche und andererseits mit der zweiten Ventilsitzfläche zu einem Dichtsitz zusammenwirkt.

Erfindungsgemäß ist der Ventilschließkörper als kugelförmiger Ventilschließkörper ausgestaltet. Dadurch wird eine vorteilhafte Dichtwirkung in Bezug auf beispielsweise konusförmig ausgestaltete Ventilsitzflächen erzielt. Ferner kann eine hohe Beständigkeit gegenüber Abrieb und gegebenenfalls eine gewisse Unempfindlichkeit gegenüber Fremdkörpern erzielt werden.

Durch die in den Unteransprüchen aufgeführten Maßnahmen sind vorteilhafte Weiterbildungen des wasserführenden Hausgeräts möglich.

Vorteilhaft ist es, dass der erste Ausgang mit der ersten Ventilsitzfläche zumindest näherungsweise gegenüberliegend zu dem zweiten Ausgang mit der zweiten Ventilsitzfläche angeordnet ist, dass in einer ersten Schaltstellung, in der der Dichtsitz zwischen dem Ventilschließkörper und der ersten Ventilsitzfläche geschlossen ist, der Ventilschließkörper durch den Druck einer aus dem Eingang durch den Ventilraum und den geöffneten Dichtsitz an der zweiten Ventilsitzfläche strömenden Flüssigkeit der Ventilschließkörper an der ersten Ventilsitzfläche gehalten ist und dass in einer zweiten Schaltstellung, in der der Dichtsitz zwischen dem Ventilschließkörper und der zweiten Ventilsitzfläche geschlossen ist, der Ventilschließkörper durch den Druck einer aus dem Eingang durch den Ventilraum und den geöffneten Dichtsitz an der ersten Ventilsitzfläche strömenden Flüssigkeit der Ventilschließkörper an der zweiten Ventilsitzfläche gehalten ist. Dies hat den Vorteil, dass der Ventilschließkörper mit der magnetischen Betätigungseinrichtung betätigt werden kann, um entweder den Dichtsitz an der ersten Ventilsitzfläche oder den Dichtsitz an der zweiten Ventilsitzfläche zu schließen, und anschließend der Ventilschließkörper durch den Druck der Flüssigkeit in seiner Stellung gehalten ist, wobei durch den Druck eine zuverlässige Abdichtung an dem jeweiligen Dichtsitz gewährleistet ist. Die Betätigungseinrichtung muss daher nur während des Schaltvorgangs angesteuert werden. Dadurch kann insbesondere eine Erwärmung der Betätigungseinrichtung, wie sie bei einer durchgehenden Ansteuerung auftritt, verhindert werden. Die Beanspruchung der Betätigungseinrichtung ist dabei ebenfalls verringert. Somit kann die Betätigungseinrichtung kostengünstig ausgestaltet und insbesondere kleiner dimensioniert werden.

In vorteilhafter Weise ist ein Sperrventil vorgesehen, das in einer Eingangsleitung angeordnet ist. Hierbei ist es ferner vorteilhaft, dass eine Steuerung vorgesehen ist und dass die Steuerung bei einer Betätigung des Ventilschließkörpers die Eingangsleitung mittels des Sperrventils sperrt. Durch die Sperrung der Eingangsleitung mittels des Sperrventils wird der Flüssigkeitsstrom durch den Ventilraum unterbrochen, so dass der Ventilraum zumindest im Wesentlichen drucklos geschaltet ist. Somit kann eine Betätigung des Ventilschließkörpers durch die magnetische Betätigungseinrichtung mit einer relativ geringen Verstellkraft erfolgen. Nach der Verstellung des Ventilschließkörpers kann die Eingangsleitung wieder freigegeben werden, so dass der Ventilschließkörper durch den Druck der Flüssigkeit im Ventilraum in seiner Stellung gehalten wird.

Vorteilhaft ist es, dass der Ventilschließkörper zumindest im Wesentlichen aus einem ferromagnetischen Material gebildet ist. Dabei kann der Ventilschließkörper allerdings auch Bestandteile aufweisen, die nicht ferromagnetisch sind, beispielsweise eine Ummantelung.

Vorteilhaft ist es, dass die magnetische Betätigungseinrichtung zwei Magnetelemente aufweist. Hierbei können die Magnetelemente als Magnetspulen ausgestaltet sein. Möglich ist es allerdings auch, dass eines der Magnetelemente als Magnetspule ausgestaltet ist, während das andere Magnetelement als Permanentmagnet ausgestaltet ist. Durch einen Permanentmagnet kann hierbei ein permanentes Magnetfeld erzeugt werden, wobei dieses permanente Magnetfeld so vorgegeben sein kann, dass hierdurch weder ein Verschließen des Dichtsitzes an der ersten Ventilsitzfläche noch ein Verschließen des Dichtsitzes an der zweiten Ventilsitzfläche erfolgt. Durch die Bestromungsrichtung der Magnetspule kann dann ein Schließen entweder des Dichtsitzes an der ersten Ventilsitzfläche oder des Dichtsitzes an der zweiten Ventilsitzfläche erzielt werden.

Ferner ist es vorteilhaft, dass die Magnetelemente die erste Ventilsitzfläche und die zweite Ventilsitzfläche umfänglich umschließen. Hierbei ist es ferner von Vorteil, dass die Magnetelemente koaxial zu einer Achse des Ventilraums, insbesondere eines zylinderförmig ausgestalteten Ventilraums, angeordnet sind.

In vorteilhafter Weise ist der Ventilraum als zylindrischer Ventilraum ausgestaltet, wobei der Ventilschließkörper bei geöffnetem Dichtsitz an der ersten Ventilsitzfläche und geöffnetem Dichtsitz an der zweiten Ventilsitzfläche in einer labilen Gleichgewichtsstellung ist. Bei dieser Ausgestaltung kann mit einer relativ geringen Betätigungskraft eine Verstellung des Ventilschließkörpers erfolgen, wobei die erforderliche Dichtwirkung an dem jeweiligen Dichtsitz gegebenenfalls erst durch den Druck der Flüssigkeit im Ventilraum aufgebracht wird. Allerdings ist es auch möglich, dass der Ventilraum eine Mulde aufweist, die zum Aufnehmen des Ventilschließkörpers bei geöffnetem Dichtsitz ah der ersten Ventilsitzfläche und geöffnetem Dichtsitz an der zweiten Ventilsitzfläche dient. Hierdurch kann eine dritte Schaltstellung realisiert werden, bei der die über die Eingangsleitung zugeführte Flüssigkeit sowohl auf den ersten Ausgang als auch auf den zweiten Ausgang aufgeteilt wird. Dies ist speziell für eine Anwendung von Vorteil, bei der eine Einspülschale mit drei Kammern vorgesehen ist. Hierbei kann in vorteilhafter Weise der erste Ausgang des Schaltventils mit einem ersten in die Einspülschale gerichteten Spülschlauch verbunden sein und der zweite Ausgang kann mit einem zweiten in die Einspülschale gerichteten Spülschlauch verbunden sein.

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigen:
- Fig. 1: ein wasserführendes Hausgerät in einer auszugsweisen, schematischen Darstellung entsprechend einem Ausführungsbeispiel und
- Fig. 2: das in Fig. 1 dargestellte Schaltventil des wasserführenden Hausgeräts in einer schematischen Darstellung entsprechend einem zweiten Ausführungsbeispiel.

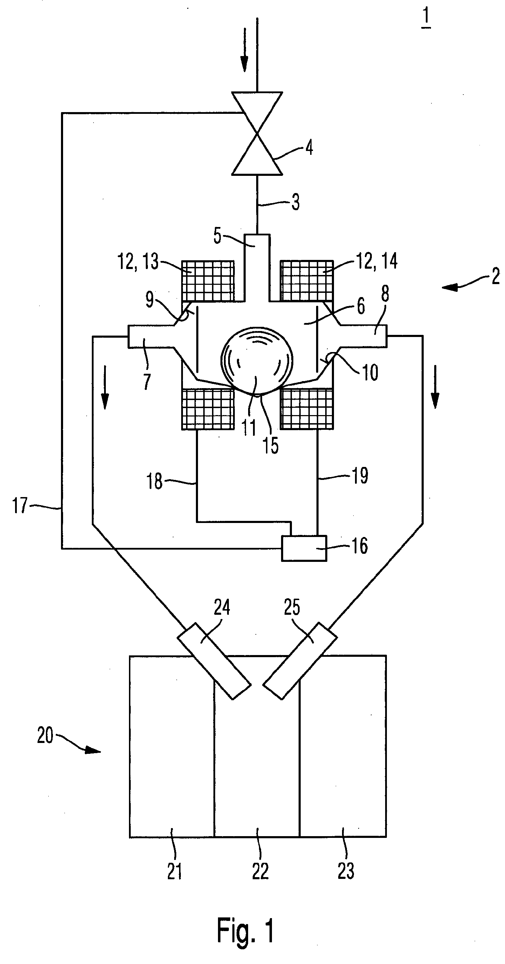

Fig. 1 zeigt ein wasserführendes Hausgerät 1 in einer auszugsweisen, schematischen Darstellung entsprechend einem ersten Ausführungsbeispiel. Das wasserführende Hausgerät 1 kann insbesondere als Wäschebehandlungsgerät ausgestaltet sein und zum Waschen und/oder Trocknen von Wäsche dienen. Speziell kann das wasserführende Hausgerät 1 als Waschmaschine oder Waschtrockner ausgestaltet sein. Das wasserführende Hausgerät 1 eignet sich allerdings in entsprechender Ausgestaltung auch für andere Anwendungsfälle, insbesondere kann es als Geschirrspüler ausgestaltet sein.

Das wasserführende Hausgerät 1 weist ein Schaltventil 2 auf. In diesem Ausführungsbeispiel ist das Schaltventil 2 in einem Einspülstrang des wasserführenden Hausgeräts 1 angeordnet. Das Schaltventil 2 kann allerdings auch in einem Abpumpstrang oder an einer anderen Stelle des wasserführenden Hausgeräts 1 angeordnet sein.

Das wasserführende Hausgerät 1 weist eine Eingangsleitung 3 auf, in der ein Sperrventil 4 angeordnet ist. Die Eingangsleitung 3 kann beispielsweise mit einem Wasserhahn einer Hausinstallation verbunden sein, um Wasser bei geöffnetem Sperrventil 4 über die Eingangsleitung 3 in das wasserführende Hausgerät 1 zu führen. Die Eingangsleitung 3 ist mit einem Eingang 5 verbunden, so dass bei geöffnetem Sperrventil 4 Wasser aus der Eingangsleitung 3 über den Eingang 5 in das Schaltventil 2 geführt wird. Das Schaltventil 2 weist einen Ventilraum 6 auf, in den die Eingangsleitung 3 über den Eingang 5 mündet. Ferner weist das Schaltventil 2 einen ersten Ausgang 7 und einen zweiten Ausgang 8 auf. An dem ersten Ausgang 7 ist eine erste Ventilsitzfläche 9 ausgebildet. Ferner ist an dem zweiten Ausgang 8 eine zweite Ventilsitzfläche 10 ausgebildet. Die Ventilsitzflächen 9, 10 sind einander zugewandt.

In dem Ventilraum 6 ist ein Ventilschließkörper 11 angeordnet, der einerseits mit der ersten Ventilsitzfläche 9 am ersten Ausgang 7 und andererseits mit der zweiten Ventilsitzfläche 10 am zweiten Ausgang 8 zu einem Dichtsitz zusammenwirkt. In der in der Fig. 1 dargestellten Stellung des Ventilschließkörpers 11 sind sowohl der Dichtsitz an der ersten Ventilsitzfläche 9 als auch der Dichtsitz an der zweiten Ventilsitzfläche 10 geöffnet. Außerdem ist eine magnetische Betätigungseinrichtung 12 vorgesehen, die Magnetelemente 13, 14 aufweist. Die Magnetelemente 13, 14 können als Magnetspulen 13, 14 ausgestaltet sein. Möglich ist es auch, dass eines der Magnetelemente 13, 14 als Permanentmagnet ausgestaltet ist, während das jeweils andere der Magnetelemente 13, 14 als Magnetspule ausgestaltet ist. In diesem Ausführungsbeispiel sind die Magnetelemente 13, 14 als ringförmige Magnetelemente 13, 14 ausgestaltet, wobei das Magnetelement 13 die erste Ventilsitzfläche 9 umfänglich umschließt und das Magnetelement 14 die zweite Ventilsitzfläche 10 umfänglich umschließt. Ferner weist der Ventilraum 9 in diesem Ausführungsbeispiel eine Mulde 15 auf, die im unbestromten Zustand der Magnetelemente 13, 14 zum Aufnehmen des Ventilschließkörpers 11 dient, wobei die Dichtsitze an den Ventilsitzflächen 9, 10 geöffnet sind.

Das wasserführende Hausgerät 1 weist eine Steuerung 16 auf, die der magnetischen Betätigungseinrichtung 12 und dem Sperrventil 4 zugeordnet ist. Dabei ist die Steuerung 16 über eine Steuerleitung 17 mit dem Sperrventil 4 sowie über Steuerleitungen 18, 19 mit den Magnetelementen 13, 14 der magnetischen Betätigungseinrichtung 12 verbunden. Sofern eines der Magnetelemente 13, 14 als Permanentmagnet ausgestaltet ist, kann die entsprechende Steuerleitung 18 bzw. 19 entfallen.

Aufgrund der Anordnung in der Mulde 15 befindet sich der kugelförmige Ventilschließkörper 11 in einer relativ stabilen Gleichgewichtsposition. Wenn die magnetische Betätigungseinrichtung 12 nicht angesteuert wird und gleichzeitig das Sperrventil 4 geöffnet wird, dann fließt Wasser über den Eingang 5 in den Ventilraum 6 ein. Der hierbei erzeugte Flüssigkeitsstrom teilt sich auf den ersten Ausgang 7 und den zweiten Ausgang 8 auf, wobei der Ventilschließkörper 11 in seiner Position verbleibt. Somit kann das einströmende Wasser sowohl über den ersten Ausgang 7 als auch über den zweiten Ausgang 8 zu einer Einspülschale 20 geführt werden.

Die Einspülschale 20 weist drei Kammern 21, 22, 23 auf. Der erste Ausgang 7 des Schaltventils 2 ist über einen in die Einspülschale 20 gerichteten Spülschlauch 24 verbunden. Ferner ist der zweite Ausgang 8 mit einem ebenfalls in die Einspülschale 20 gerichteten Spülschlauch 25 verbunden. Dabei sind die Spülschläuche 24, 25 aus unterschiedlichen Richtungen auf die Einspülschale 20 gerichtet. In dem Fall, in dem das Wasser über die beiden Ausgänge 7, 8 durch die Spülschläuche 24, 25 strömt, treffen die aus den Spülschläuchen 24, 25 austretenden Wasserstrahlen so aufeinander, dass das Wasser zumindest im Wesentlichen in die Kammer 22 der Einspülschale 20 gelangt. Dadurch kann ein in der Kammer 22 vorgesehenes Wäschebehandlungsmittel in einen Behandlungsbereich des wasserführenden Hausgeräts 1, beispielsweise in einen Laugenbehälter, eingespült werden. Somit kann in dieser Betriebsart durch Stromlosschalten der Magnetelemente 13, 14 der magnetischen Betätigungseinrichtung 12 die Kammer 22 ausgespült werden, da Wasser über die beiden Ausgänge 7, 8 geführt wird.

In einer weiteren Betriebsart kann die magnetische Betätigungseinrichtung 12 beispielsweise die Magnetspule 13 bestromen, so dass der ferromagnetische Ventilschließkörper 11 von der Magnetspule 13 angezogen und somit in Richtung auf die erste Ventilsitzfläche 9 verstellt wird. Hierbei steuert die Steuerung 17 das Sperrventil 4 so an, dass die Eingangsleitung 3 gesperrt ist und somit der Ventilraum 6 drucklos geschaltet ist. Nach dem Betätigen des Ventilschließkörpers 11 befindet sich der Ventilschließkörper 11 an der Ventilsitzfläche 9. Die Steuerung 16 betätigt nun das Sperrventil 4, so dass die Eingangsleitung 3 wieder geöffnet ist und Wasser in den Ventilraum 6 einströmt. Das Wasser im Ventilraum 6 steht unter einem gewissen Druck, der den Ventilschließkörper 11 gegen die erste Ventilsitzfläche 9 presst. Die Bestromung der Magnetspule 13 kann nun abgeschaltet werden. Aufgrund des Drucks der Flüssigkeit im Ventilraum 6 wird der Ventilschließkörper 11 weiterhin gegen die erste Ventilsitzfläche 9 gepresst, so dass der zwischen der ersten Ventilsitzfläche 9 und dem Ventilschließkörper 11 gebildete Dichtsitz geschlossen ist. In dieser Stellung des Ventilschließkörpers 11 ist der erste Ausgang 7 gesperrt, während der Dichtsitz an der zweiten Ventilsitzfläche 10 geöffnet und somit der zweite Ausgang 8 freigegeben ist. Dadurch fließt das Wasser aus der Eingangsleitung 3 über den Eingang 5, den Ventilraum 6, den zweiten Ausgang 8 und den Spülschlauch 25 zu der Einspülschale 20.

In diesem Fall wird somit nur ein Wasserstrahl aus dem Spülschlauch 25 erzeugt. Der Spülschlauch 25 ist so gerichtet, dass dieser Wasserstrahl zumindest im Wesentlichen nur in die Kammer 21 trifft und ein in der Kammer 21 vorgesehenes Wäschebehandlungsmittel ausspült. Somit gelangt das Wasser mit dem in der Kammer 21 vorgesehenen Wäschebehandlungsmittel in einen Laugenbehälter oder dergleichen.

Somit kann durch kurzzeitiges Bestromen der Magnetspule 13 während der von der Steuerung 16 gesteuerten Schaltphase ein Ausspülen der Kammer 21 erfolgen.

In einer weiteren Betriebsart kann auch ein ausschließlicher Wasserfluss durch den Spülschlauch 24 erzeugt werden. Hierzu wird in entsprechender Weise die Magnetspule 14 bestromt, während die Steuerung 16 während dieser Ansteuerung der magnetischen Betätigungseinrichtung 12 das Sperrventil 4 so ansteuert, dass die Eingangsleitung 3 gesperrt ist. Hierdurch wird der Ventilschließkörper 11 an die zweite Ventilsitzfläche 11 verstellt. Bei anschließendem Öffnen der Eingangsleitung 3 wird der Ventilschließkörper 11 in dieser Betriebsart nun durch den Druck im Ventilraum 6 an der zweiten Ventilsitzfläche 10 gehalten, so dass der Dichtsitz zwischen dem Ventilschließkörper 11 und der zweiten Ventilsitzfläche 10 zuverlässig geschlossen ist, auch wenn die Bestromung der Magnetspule 14 wieder abgeschaltet ist. Somit wird der Wasserstrom nur über den Spülschlauch 24 geleitet. Der aus dem Spülschlauch 24 austretende Wasserstrahl trifft nur in die Kammer 23, so dass nun das in der Kammer 23 vorgesehene Wäschebehandlungsmittel ausgespült wird.

Das Sperrventil 4 kann durch ein Aquastoppventil 4 gebildet sein. Hierbei ergibt sich der weitere Vorteil, dass das Schaltventil 2 den Eingang 5 und somit die Eingangsleitung 3 stets freigibt, da zumindest ein Dichtsitz an einer der Ventilsitzflächen 9, 10 geöffnet ist. Dadurch besteht ein zu jedem Zeitpunkt offenes System, das somit nie unter Druck steht. Dadurch kann ein Aquastoppsystem, das durch das Sperrventil 4 realisiert ist, besonders sicher ausgestaltet werden.

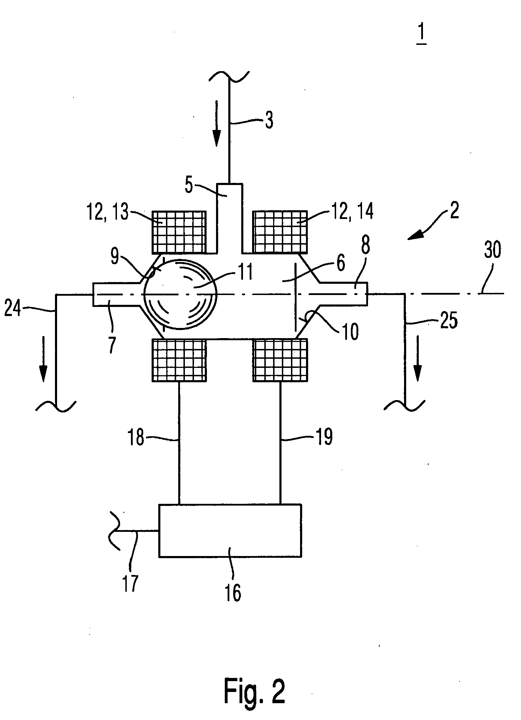

Fig. 2 zeigt das Schaltventil 2 eines wasserführenden Hausgeräts 1 entsprechend einem zweiten Ausführungsbeispiel. In diesem Ausführungsbeispiel ist der Ventilraum 6 als zumindest im Wesentlichen zylindrischer Ventilraum 6 ausgestaltet. Der Ventilraum 6 weist eine Achse 30 auf, an der der erste Ausgang 7 und der zweite Ausgang 8 ausgerichtet sind. Die Achse 30 kann horizontal orientiert sein. Der in dem Ventilraum 6 angeordnete Ventilschließkörper 11 befindet sich bei einem stromlosen Zustand der Magnetspulen 13, 14 der magnetischen Betätigungseinrichtung 12 und bei gesperrter Eingangsleitung 3 in keinem definierten Zustand. Ein definierter Zustand wird in diesem Ausführungsbeispiel erst erreicht, wenn der Ventilschließkörper 11 von der Betätigungseinrichtung 12 zum Verschließen des Dichtsitzes an der ersten Ventilsitzfläche 9 oder des Dichtsitzes an der zweiten Ventilsitzfläche 10 betätigt wird und die Eingangsleitung 3 geöffnet wird, so dass der Ventilschließkörper 11 auch bei stromlos geschalteten Magnetspulen 13, 14 durch den Druck im Ventilraum 6 in seiner Stellung gehalten ist.

Allerdings kann eine Vorzugsstellung des Ventilschließkörpers 11 erzielt werden, wenn die Achse 30 gegenüber einer Horizontalen geneigt ist. Die Achse 30 ist dann teilweise oder vollständig vertikal orientiert. Speziell kann die Achse 30 zumindest im Wesentlichen vertikal orientiert sein, so dass der Ventilschließkörper 11 bei gesperrter Eingangsleitung 3 und stromlosen Magnetspulen 13, 14 je nach Orientierung der Achse 30 an der ersten Ventilsitzfläche 9 oder der zweiten Ventilsitzfläche 10 anliegt. Bei solch einer Ausgestaltung kann auch eine der Magnetspulen 13, 14 entfallen.

In einer weiteren Ausgestaltung ist es auch möglich, dass eines der Magnetelemente 13, 14 als Permanentmagnet ausgestaltet ist. Beispielsweise kann das Magnetelement 13 als Permanentmagnet ausgestaltet sein. Auch bei einer horizontal orientierten Achse 30 ergibt sich dann eine Vorzugsstellung, da bei stromlos geschalteter Magnetspule 14 der Ventilschließkörper 11 von dem Permanentmagneten 13 angezogen wird, so dass sich zumindest näherungsweise die in der Fig. 2 veranschaulichte Ausgangsstellung ergibt. Beim Öffnen der Eingangsleitung 3 wird der Ventilschließkörper 11 dann durch den Druck im Ventilraum 6 gegen die erste Ventilsitzfläche 9 gepresst. Wird hingegen die Magnetspule 14 bei geschlossener Eingangsleitung 3 betätigt, so dass die Magnetkraft des Permanentmagneten 13 überwunden wird, dann kann der Ventilschließkörper 11 an der zweiten Ventilsitzfläche 10 positioniert werden. Beim anschließenden Öffnen der Eingangsleitung 3 wird der Ventilschließkörper 11 dann durch den Druck im Ventilraum 6 zuverlässig an der zweiten Ventilsitzfläche 10 gehalten, so dass der zwischen der zweiten Ventilsitzfläche 10 und dem Ventilschließkörper 11 gebildete Dichtsitz geschlossen ist.

Je nach Ausgestaltung kann somit das gewünschte Verhalten des Schaltventils 2 vorgegeben und durch die Steuerung 16 realisiert werden. Je nach Ausgestaltung kann dabei gegebenenfalls auch im abgeschalteten Zustand, d.h. wenn das wasserführende Hausgerät 1 nicht mit Energie versorgt wird, eine Vorzugsstellung des Schaltventils 2 realisiert werden. Beispielsweise kann eine Vorzugslage des kugelförmigen Ventilschließkörpers 11 in Bezug auf den am häufigsten benutzten Ausgang 7, 8 realisiert werden. Dies kann etwa in Bezug auf eine als Haupteinspülkammer für einen Hauptwaschgang vorgesehene Kammer 21, 22 oder 23 der Einspülschale 20 erfolgen, so dass in diesem Fall keine Betätigung des Ventilschließkörpers 11 durch die magnetische Betätigungseinrichtung 12 erforderlich ist. Möglich ist es auch, dass die magnetischen Betätigungseinrichtungen 12 lateral, insbesondere auf der Achse 30, angeordnet sind.

Die Erfindung ist nicht auf die beschriebenen Ausführungsbeispiele beschränkt.

### Bezugszeichenliste

- 1: Wasserführendes Hausgerät
- 2: Schaltventil
- 3: Eingangsleitung
- 4: Sperrventil
- 5: Eingang
- 6: Ventilraum
- 7: erster Ausgang
- 8: zweiter Ausgang
- 9: erste Ventilsitzfläche
- 10: zweite Ventilsitzfläche
- 11: Ventilschließkörper
- 12: magnetische Betätigungseinrichtung
- 13, 14: Magnetelement
- 15: Mulde
- 16: Steuerung
- 17, 18, 19: Steuerleitung
- 20: Einspülschale
- 21, 22, 23: Kammer
- 24, 25: Spülschlauch
- 30: Achse

## Patentansprüche

1. Wasserführendes Hausgerät (1), insbesondere Wäschebehandlungsgerät zum Waschen und/oder Trocknen von Wäsche, mit einem Schaltventil (2), das einen Ventilraum (6) aufweist, in den ein Eingang (5) mündet, wobei der Ventilraum (6) einen ersten Ausgang (7) mit einer ersten Ventilsitzfläche (9) und einen zweiten Ausgang (8) mit einer zweiten Ventilsitzfläche (10) aufweist, und wobei das Schaltventil (2) eine magnetische Betätigungseinrichtung (12) zum wahlweisen Steuern eines Flüssigkeitsstroms von dem Eingang (5) zu dem ersten Ausgang (7) oder dem zweiten Ausgang (8) aufweist, **dadurch gekennzeichnet, dass** das Schaltventil (2) einen von der magnetischen Betätigungseinrichtung (12) betätigbaren kugelförmigen Ventilschließkörper (11) aufweist, der einerseits mit der ersten Ventilsitzfläche (9) und andererseits mit der zweiten Ventilsitzfläche (10) zu einem Dichtsitz zusammenwirkt.

2. Wasserführendes Hausgerät nach Anspruch 1, **dadurch gekennzeichnet, dass** der erste Ausgang (7) mit der ersten Ventilsitzfläche (9) zumindest näherungsweise gegenüberliegend zu dem zweiten Ausgang (8) mit der zweiten Ventilsitzfläche (10) angeordnet ist, dass in einer ersten Schaltstellung, in der der Dichtsitz zwischen dem Ventilschließkörper (11) und der ersten Ventilsitzfläche (9) geschlossen ist, der Ventilschließkörper (11) durch den Druck einer aus dem Eingang (5) durch den Ventilraum (6) und den geöffneten Dichtsitz an der zweiten Ventilsitzfläche (10) strömenden Flüssigkeit der Ventilschließkörper (11) an der ersten Ventilsitzfläche (9) gehalten ist und dass in einer zweiten Schaltstellung, in der der Dichtsitz zwischen dem Ventilschließkörper (11) und der zweiten Ventilsitzfläche (10) geschlossen ist, der Ventilschließkörper (11) durch den Druck einer über den Eingang (5) durch den Ventilraum (6) und den geöffneten Dichtsitz an der ersten Ventilsitzfläche (9) strömenden Flüssigkeit der Ventilschließkörper (11) an der zweiten Ventilsitzfläche (10) gehalten ist.

3. Wasserführendes Hausgerät nach Anspruch 1 oder 2, **dadurch gekennzeichnet, dass** ein Sperrventil (4) vorgesehen ist, das in einer mit dem Eingang (5) verbundenen Eingangsleitung (3) angeordnet ist.

4. Wasserführendes Hausgerät nach Anspruch 3, **dadurch gekennzeichnet, dass** eine Steuerung (16) vorgesehen ist und dass die Steuerung (16) bei einer Betätigung des Ventilschließkörpers (11) die Eingangsleitung (3) mittels des Sperrventils (4) sperrt.

5. Wasserführendes Hausgerät nach einem der Ansprüche 1 bis 4, **dadurch gekennzeichnet, dass** der Ventilschließkörper (11) zumindest im Wesentlichen aus einem ferromagnetischen Material gebildet ist.

6. Wasserführendes Hausgerät nach einem der Ansprüche 1 bis 5, **dadurch gekennzeichnet, dass** die magnetische Betätigungseinrichtung (12) zumindest zwei Magnetelemente (13, 14) aufweist und dass die Magnetelemente (13, 14) als Magnetspulen (13, 14) ausgestaltet sind oder dass das eine Magnetelement (13, 14) als Magnetspule (13, 14) und das andere Magnetelement (13, 14) als Permanentmagnet (13, 14) ausgestaltet ist.

7. Wasserführendes Hausgerät nach einem der Ansprüche 1 bis 6, **dadurch gekennzeichnet, dass** die magnetische Betätigungseinrichtung (12) ein erstes Magnetelement (13), das zumindest näherungsweise die erste Ventilsitzfläche (9) umschließt, und ein zweites Magnetelement (14) aufweist, das zumindest näherungsweise die zweite Ventilsitzfläche (10) umschließt.

8. Wasserführendes Hausgerät nach Anspruch 7, **dadurch gekennzeichnet, dass** die Magnetelemente (13, 14) zumindest näherungsweise koaxial zu einer Achse (30) des Ventilraums (6) angeordnet sind.

9. Wasserführendes Hausgerät nach einem der Ansprüche 1 bis 8, **dadurch gekennzeichnet, dass** der Ventilraum (6) zumindest im Wesentlichen als zylindrischer Ventilraum (6) ausgestaltet ist, wobei der Ventilschließkörper (11) bei geöffnetem Dichtsitz an der ersten Ventilsitzfläche (9) und geöffnetem Dichtsitz an der zweiten Ventilsitzfläche (10) in einer labilen Gleichgewichtsstellung ist oder dass der Ventilraum (6) eine Mulde aufweist, die zum Aufnehmen des Ventilschließkörpers (11) bei geöffnetem Dichtsitz an der ersten Ventilsitzfläche (9) und geöffnetem Dichtsitz an der zweiten Ventilsitzfläche (10) dient.

10. Wasserführendes Hausgerät nach einem der Ansprüche 1 bis 9, **dadurch gekennzeichnet, dass** eine Einspülschale (20) vorgesehen ist, dass der erste Ausgang (7) des Schaltventils (2) mit einem ersten in die Einspülschale (20) gerichteten Spülschlauch (24) verbunden ist und dass der zweite Ausgang (8) des Schaltventils (2) mit einem zweiten in die Einspülschale (20) gerichteten Spülschlauch (25) verbunden ist.

## Claims

1. Water-conducting domestic appliance (1), in particular laundry treatment device for washing and/or drying laundry, having a switching valve (2), which has a valve chamber (6), into which an input (5) opens, wherein the valve chamber (6) has a first output (7) with a first valve seat surface (9) and a second output (8) with a second valve seat surface (10), and wherein the switching valve (2) has a magnetic actuation facility (12) for optionally controlling a fluid flow from the input (5) to the first output (7) or the second output (8), **characterised in that** the switching valve (2) has a spherical valve closing element (11) which can be actuated by the magnetic actuation facility (12), said valve closing element interacting on the one hand with the first valve seat surface (9) and on the other hand with the second valve seat surface (10) to form a seal seat.

2. Water-conducting domestic appliance according to claim 1, **characterised in that** the first output (7) with the first valve seat surface (9) is arranged at least approximately facing the second output (8) with the second valve seat surface (10), that in a first switching position, in which the seal seat is closed between the valve closing element (11) and the first valve seat surface (9), the valve closing element (11) is held on the first valve seat surface (9) by the pressure of a liquid of the valve closing element (11) flowing out of the input (5) through the valve chamber (6) and the opened seal seat to the second valve seat surface (10) and that in a second switching position, in which the seal seat is closed between the valve closing element (11) and the second valve seat surface (10), the valve closing element (11) is held on the second valve seat surface (10) by the pressure of a fluid of the valve closing element (11) flowing across the input (5) through the valve chamber (6) and the opened seal seat to the first valve seat surface (9).

3. Water-conducting domestic appliance according to claim 1 or 2, **characterised in that** a blocking valve (4) is provided, which is arranged in an input line (3) connected to the input (5).

4. Water-conducting domestic appliance according to claim 3, **characterised in that** a controller (16) is provided and that the controller (16) blocks the input line (3) by means of the blocking valve (4) with an actuation of the valve closing element (11).

5. Water-conducting domestic appliance according to one of claims 1 to 4, **characterised in that** the valve closing element (11) is formed at least substantially from a ferromagnetic material.

6. Water-conducting domestic appliance according to one of claims 1 to 5, **characterised in that** the magnetic actuation facility (12) has at least two magnet elements (13, 14) and the magnet elements (13, 14) are embodied as magnetic coils (13, 14) or the one magnet element (13, 14) is embodied as a magnetic coil (13, 14) and the other magnet element (13, 14) as a permanent magnet (13. 14).

7. Water-conducting domestic appliance as claimed in one of claims 1 to 6, **characterised in that** the magnetic actuation facility (12) has a first magnet element (13), which surrounds the first valve seat surface (9) at least approximately, and a second magnet element (14), which surrounds the second valve seat surface (10) at least approximately.

8. Water-conducting domestic appliance as claimed in claim 7, **characterised in that** the magnet elements (13, 14) are arranged at least approximately coaxially to an axis (30) of the valve chamber (6).

9. Water-conducting domestic appliance according to one of claims 1 to 8, **characterised in that** the valve chamber (6) is configured at least substantially as a cylindrical valve chamber (6), wherein the valve closing element (11) is in an unstable equilibrium position when the seal seat is open on the first valve seat surface (9) and the seal seat is open on the second valve seat surface (10) or that the valve chamber (6) has a trough, which serves to receive the valve closing element (11) when the seal seat is open on the first valve seat surface (9) and the seal seat is open on the second valve seat surface (10).

10. Water-conducting domestic appliance according to one of claims 1 to 9, **characterised in that** a detergent dispenser tray (20) is provided, that the first output (7) of the switching valve (2) is connected to a first rinsing hose (24) directed into the detergent dispenser tray (20) and that the second output (8) of the switching valve (2) is connected to a second rinsing hose (25) directed into the detergent dispenser tray (20).

## Revendications

1. Appareil ménager à circulation d'eau (1), en particulier appareil de traitement du linge pour laver et/ou sécher du linge, avec une soupape de commande (2) qui présente une chambre de soupape (6) dans laquelle une entrée (5) débouche, dans lequel la chambre de soupape (6) présente une première sortie (7) avec un premier siège de soupape (9) et une deuxième sortie (8) avec un deuxième siège de soupape (10), et dans lequel la soupape de commande (2) présente un dispositif d'actionnement magnétique (12) pour le pilotage au choix d'un écoulement de fluide de l'entrée (5) vers la première sortie (7) ou la deuxième sortie (8), **caractérisé en ce que** la soupape de commande (2) présente un corps de fermeture de soupape (11) sphérique actionnable par le dispositif d'actionnement magnétique (12), qui coopère d'une part avec le premier siège de soupape (9) et d'autre part avec le deuxième siège de soupape (10) pour former un siège d'étanchéité.

2. Appareil ménager à circulation d'eau selon la revendication 1, **caractérisé en ce que** la première sortie (7) avec le premier siège de soupape (9) est au moins disposée approximativement en face de la deuxième sortie (8) avec le deuxième siège de soupape (10), **en ce que** dans une première position de commande dans laquelle le siège d'étanchéité entre le corps de fermeture de soupape (11) et le premier siège de soupape (9) est fermé, le corps de fermeture de soupape (11) est maintenu sur le premier siège de soupape (9) par la pression d'un fluide du corps de fermeture de soupape (11) s'écoulant de l'entrée (5) à travers la chambre de soupape (6) et le siège d'étanchéité ouvert sur le deuxième siège de soupape (10) et **en ce que** dans une deuxième position de commande dans laquelle le siège d'étanchéité entre le corps de fermeture de soupape (11) et le deuxième siège de soupape (10) est fermé, le corps de fermeture de soupape (11) est maintenu sur le deuxième siège de soupape (10) par la pression d'un fluide du corps de fermeture de soupape (11) s'écoulant de l'entrée (5) à travers la chambre de soupape (6) et le siège de soupape ouvert sur le premier siège de soupape (9).

3. Appareil ménager à circulation d'eau selon la revendication 1 ou 2, **caractérisé en ce qu'**une soupape d'arrêt (4) est prévue, laquelle est disposée dans une conduite d'entrée (3) reliée à l'entrée (5).

4. Appareil ménager à circulation d'eau selon la revendication 3, **caractérisé en ce qu'**une commande (16) est prévue et **en ce que** la commande (16) coupe la conduite d'entrée (3) au moyen de la soupape d'arrêt (4) lors d'un actionnement du corps de fermeture de soupape (11).

5. Appareil ménager à circulation d'eau selon l'une des revendications 1 à 4, **caractérisé en ce que** le corps de fermeture de soupape (11) est au moins essentiellement constitué en un matériau ferromagnétique.

6. Appareil ménager à circulation d'eau selon l'une des revendications 1 à 5, **caractérisé en ce que** le dispositif d'actionnement magnétique (12) présente au moins deux éléments aimantés (13,14) et **en ce que** les éléments aimantés (13,14) sont exécutés sous forme de bobines d'induction (13,14) ou **en ce qu'**un élément aimanté (13, 14) est exécuté sous forme de bobine d'induction (13, 14) et l'autre élément aimanté (13,14) sous forme d'aimant permanent (13,14).

7. Appareil ménager à circulation d'eau selon l'une des revendications 1 à 6, **caractérisé en ce que** le dispositif d'actionnement magnétique (12) présente un premier élément aimanté (13) qui englobe au moins approximativement le premier siège de soupape (9) et un deuxième élément aimanté (14) qui englobe au moins approximativement le deuxième siège de soupape (10).

8. Appareil ménager à circulation d'eau selon la revendication 7, **caractérisé en ce que** les éléments aimantés (13, 14) sont au moins approximativement disposés coaxialement par rapport à un axe (30) de la chambre de soupape (6).

9. Appareil ménager à circulation d'eau selon l'une des revendications 1 à 8, **caractérisé en ce que** la chambre de soupape (6) est au moins essentiellement exécutée sous forme de chambre de soupape cylindrique (6), dans lequel le corps de fermeture de soupape (11) se trouve dans une position d'équilibre instable lorsque le siège d'étanchéité est ouvert au niveau du premier siège de soupape (9) et lorsque le siège d'étanchéité est ouvert au niveau du deuxième siège de soupape (10) ou **en ce que** la chambre de soupape (6) présente un creux servant à accueillir le corps de fermeture de soupape (11) lorsque le siège d'étanchéité est ouvert au niveau du premier siège de soupape (9) et lorsque le siège d'étanchéité est ouvert au niveau du deuxième siège de soupape (10).

10. Appareil ménager à circulation d'eau selon l'une des revendications 1 à 9, **caractérisé en ce qu'**un bac à détergent (20) est prévu, **en ce que** la première sortie (7) de la soupape de commande (2) est reliée à un premier tuyau de lavage (24) disposé dans le bac à détergent (20) et **en ce que** la deuxième sortie (8) de la soupape de commande (2) est reliée à un deuxième tuyau de lavage (25) disposé dans le bac à détergent (20).
